# EUROPEAN PATENT APPLICATION

(11) **EP 2 822 093 A1**
(43) Date of publication of application: **07.01.2015**
(21) Application number: 14160895.0
(22) Date of filing: 20.03.2014
(51) Int. Cl.: H01Q 1/24, H01Q 13/10, H01Q 21/28

(54) **Wireless electronic devices including a variable tuning component**

(30) Priority: 01.07.2013 US 201313932636
(71) Applicant: Sony Corporation, Tokyo 108-0075 (JP)
(72) Inventor: Vance, Scott, 24542 Staffanstorp (SE); So, Rune, DK-2200 Copenhagen N (DK); Liu, Jian, 22479 Lund (SE)
(74) Representative: Hoffmann Eitle

(57) **Abstract**

Wireless electronic devices are provided. A wireless electronic device may include a ground plane and a metal perimeter around the ground plane. The metal perimeter may include an antenna. Moreover, the wireless electronic device may include a variable tuning component coupled to the metal perimeter and configured to tune a resonant frequency of the antenna.

## Description

### FIELD

The present inventive concepts generally relate to the field of communications and, more particularly, to antennas and wireless electronic devices incorporating the same.

### BACKGROUND

Wireless electronic devices may include a metal perimeter exposed to users of the wireless electronic devices. Although the metal perimeter may be used as an antenna, performance of the antenna may be relatively weak in some frequency bands.

### SUMMARY

Various embodiments of the present inventive concepts include a wireless electronic device. The wireless electronic device may include a metal perimeter around a ground plane, and the metal perimeter may include a multi-band cellular antenna. Moreover, the wireless electronic device may include a variable tuning component coupled to the metal perimeter and configured to tune a resonant frequency of the multi-band cellular antenna in response to a signal from a processor (e.g., a controller) of the wireless electronic device.

In various embodiments, the variable tuning component may be configured to select between a plurality of selectable states corresponding to a plurality of respective load components. In each of the plurality of selectable states, the variable tuning component may be configured to differently tune the resonant frequency of the multi-band cellular antenna. The plurality of load components may include a plurality of respective capacitance values or impedance values that differently tune the resonant frequency of the multi-band cellular antenna. In some embodiments, the variable tuning component may include a tuning switch configured to switch between the plurality of respective capacitance values or impedance values to tune the resonant frequency of the multi-band cellular antenna.

According to various embodiments, the variable tuning component may be in a slot (and/or gap) between the metal perimeter and the ground plane. In some embodiments, the multi-band cellular antenna may be a non-planar antenna of the metal perimeter. Additionally or alternatively, the wireless electronic device may include a ground point and a feed point of the multi-band cellular antenna. The variable tuning component may be spaced apart from, and adjacent a midpoint between, the ground point and the feed point. Alternatively, the variable tuning component may be adjacent the ground point.

In various embodiments, the multi-band cellular antenna may include a first antenna of the metal perimeter, and the metal perimeter may include a second antenna. The signal from the processor may be a first signal from the processor. The variable tuning component may be a first variable tuning component coupled to to the first antenna of the metal perimeter. Tuning of the first variable tuning component may be controlled by the first signal from the processor. The wireless electronic device may include a second variable tuning component coupled to the second antenna of the metal perimeter. Tuning of the second variable tuning component may be controlled by a second signal from the processor. In some embodiments, the first and second antennas may be first and second non-planar antennas, respectively.

According to various embodiments, the metal perimeter may include a non-planar portion including at least a portion of the multi-band cellular antenna. Moreover, the wireless electronic device may include a display screen on the ground plane, and a transceiver circuit coupled to the multi-band cellular antenna and configured to provide communications for the wireless electronic device.

A wireless electronic device, according to various embodiments, may include a ground plane, a display screen on the ground plane, and a metal perimeter around the ground plane. The metal perimeter may include first and second antennas. Moreover, the wireless electronic device may include a variable tuning component coupled to the metal perimeter and configured to tune a resonant frequency of the first antenna in response to a signal from a processor (e.g., a controller) of the wireless electronic device, and a transceiver circuit coupled to at least one of the first and second antennas and configured to provide communications for the wireless electronic device.

In various embodiments, the variable tuning component may be configured to select between a plurality of selectable states corresponding to a plurality of respective load components. In each of the plurality of selectable states, the variable tuning component may be configured to differently tune the resonant frequency of the first antenna. The plurality of load components may include a plurality of respective capacitance values or impedance values that differently tune the resonant frequency of the first antenna. The variable tuning component may include a tuning switch configured to switch between the plurality of respective capacitance values or impedance values to tune the resonant frequency of the first antenna.

According to various embodiments, the variable tuning component may include a first variable tuning component. Moreover, the wireless electronic device may include a second variable tuning component coupled to the metal perimeter and configured to tune a resonant frequency of the second antenna. Additionally or alternatively, the first antenna may be a non-planar primary (e.g., main) cellular antenna, and the second antenna may be a non-planar secondary cellular antenna.

In various embodiments, the wireless electronic device may include a ground point and a feed point of the first antenna. In some embodiments, the variable tuning component may be spaced apart from, and adjacent a midpoint between, the ground point and the feed point of the first antenna. Alternatively, the variable tuning component may be adjacent the ground point of the first antenna.

Other devices and/or systems according to embodiments of the inventive concepts will be or become apparent to one with skill in the art upon review of the following drawings and detailed description. It is intended that all such additional devices and/or systems be included within this description, be within the scope of the present inventive concepts, and be protected by the accompanying claims. Moreover, it is intended that all embodiments disclosed herein can be implemented separately or combined in any way and/or combination.

### BRIEF DESCRIPTION OF THE DRAWINGS

Figure 1 is a schematic illustration of a wireless communications network that provides service to wireless electronic devices, according to various embodiments of the present inventive concepts.
Figures 2A and 2B illustrate front and rear views, respectively, of a wireless electronic device, according to various embodiments of the present inventive concepts.
Figure 3 is a block diagram illustrating a wireless electronic device, according to various embodiments of the present inventive concepts.
Figures 4A and 4B illustrate detailed views of a metal perimeter of a wireless electronic device, according to various embodiments of the present inventive concepts.
Figure 5A illustrates a Voltage Standing Wave Ratio (VSWR) graph of a prior art wireless electronic device. Figures 5B and 5C illustrate VSWR and return loss graphs of a wireless electronic device according to various embodiments of the present inventive concepts.
Figure 6A illustrates a graph of gain of a prior art wireless electronic device. Figures 6B and 6C illustrate graphs of gain of a wireless electronic device according to various embodiments of the present inventive concepts.
Figure 7 illustrates a return loss graph and a Smith chart for a simulation of a wireless electronic device, according to various embodiments of the present inventive concepts,
Figures 8A and 8B illustrate VSWR and return loss graphs of a wireless electronic device, according to various embodiments of the present inventive concepts.
Figures 9A and 9B illustrate Smith charts of a wireless electronic device, according to various embodiments of the present inventive concepts.

### DETAILED DESCRIPTION OF EMBODIMENTS

The present inventive concepts now will be described more fully with reference to the accompanying drawings, in which embodiments of the inventive concepts are shown. However, the present application should not be construed as limited to the embodiments set forth herein. Rather, these embodiments are provided so that this disclosure will be thorough and complete, and to fully convey the scope of the embodiments to those skilled in the art. Like reference numbers refer to like elements throughout.

The terminology used herein is for the purpose of describing particular embodiments only and is not intended to be limiting of the embodiments. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, steps, operations, elements, and/or components, but do not preclude the presence or addition of one or more other features, steps, operations, elements, components, and/or groups thereof.

It will be understood that when an element is referred to as being "coupled," "connected," or "responsive" to another element, it can be directly coupled, connected, or responsive to the other element, or intervening elements may also be present. In contrast, when an element is referred to as being "directly coupled," "directly connected," or "directly responsive" to another element, there are no intervening elements present. As used herein, the term "and/or" includes any and all combinations of one or more of the associated listed items.

Spatially relative terms, such as "above," "below," "upper," "lower," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly. Well-known functions or constructions may not be described in detail for brevity and/or clarity.

It will be understood that, although the terms "first," "second," etc. may be used herein to describe various elements, these elements should not be limited by these terms. These terms are only used to distinguish one element from another. Thus, a first element could be termed a second element without departing from the teachings of the present embodiments.

Unless otherwise defined, all terms (including technical and scientific terms) used herein have the same meaning as commonly understood by one of ordinary skill in the art to which these embodiments belong. It will be further understood that terms, such as those defined in commonly-used dictionaries, should be interpreted as having a meaning that is consistent with their meaning in the context of the relevant art and will not be interpreted in an idealized or overly-formal sense unless expressly so defined herein.

For purposes of illustration and explanation only, various embodiments of the present inventive concepts are described herein in the context of "wireless electronic devices." Among other devices/systems, wireless electronic devices may include multi-band wireless communication terminals (e.g., portable electronic devices/wireless terminals/mobile terminals/terminals) that are configured to carry out cellular communications (e.g., cellular voice and/or data communications) in more than one frequency band. It will be understood, however, that the present inventive concepts are not limited to such embodiments and may be embodied generally in any device and/or system that is configured to transmit and receive in one or more frequency bands. Moreover, the terms "about" and "substantially," as described herein, mean that the recited number or value can vary by up to +/- 25%.

Although a metal perimeter along the exterior of a wireless electronic device may be used as an antenna, performance of the antenna as measured by gain or frequency bandwidth may be relatively weak in low frequency bands. For example, although such a metal exterior perimeter surface of the wireless electronic device may provide a desirable look and feel to a user of the wireless electronic device, antenna correlation performance may be relatively weak in band 17 (e.g., including 704-746 Megahertz (MHz) frequencies), but may be relatively good in other bands. Moreover, freespace performance of the antenna (e.g., performance when the wireless electronic device is not contacting anything) may be relatively weak, whereas antenna losses caused by a user's hand contacting the wireless electronic device may be relatively moderate. Various embodiments of the wireless electronic devices described herein, however, may improve low-band antenna performance by using a variable tuning component to tune a resonant frequency of a metal perimeter antenna.

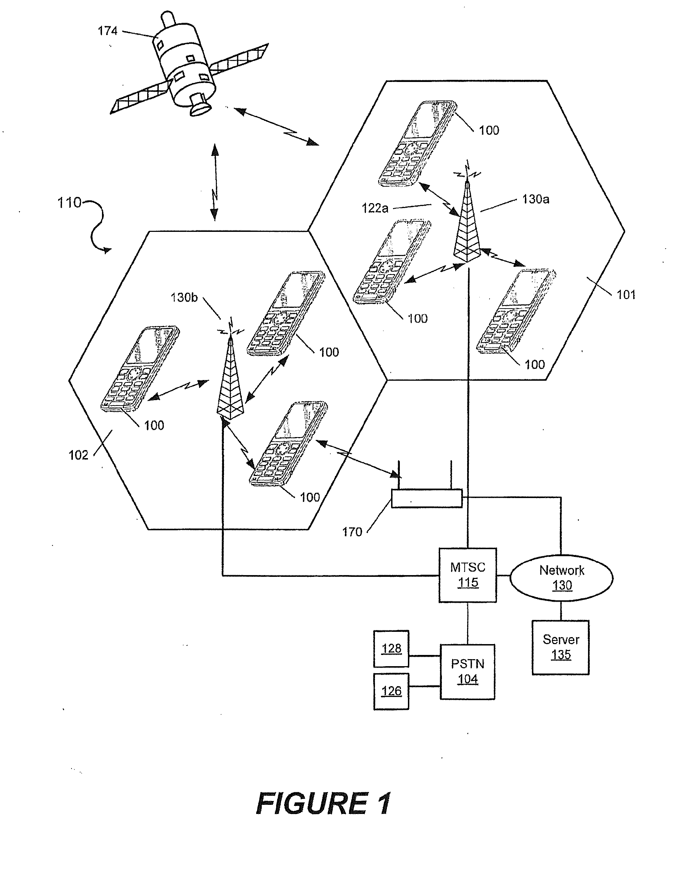

Referring to Figure 1, a diagram is provided of a wireless communications network 110 that supports communications in which wireless electronic devices 100 can be used according to various embodiments of the present inventive concepts. The network 110 includes cells 101, 102 and base stations 130a, 130b in the respective cells 101, 102. Networks 110 are commonly employed to provide voice and data communications to subscribers using various radio access standards/technologies. The network 110 may include wireless electronic devices 100 that may communicate with the base stations 130a, 130b. The wireless electronic devices 100 in the network 110 may also communicate with a Global Positioning System (GPS) satellite 174, a local wireless network 170, a Mobile Telephone Switching Center (MTSC) 115, and/or a Public Service Telephone Network (PSTN) 104 (i.e., a "landline" network).

The wireless electronic devices 100 can communicate with each other via the Mobile Telephone Switching Center (MTSC) 115. The wireless electronic devices 100 can also communicate with other devices/terminals, such as terminals 126, 128, via the PSTN 104 that is coupled to the network 110. As also shown in Figure 1, the MTSC 115 is coupled to a computer server 135 via a network 130, such as the Internet.

The network 110 is organized as cells 101, 102 that collectively can provide service to a broader geographic region. In particular, each of the cells 101, 102 can provide service to associated sub-regions (e.g., regions within the hexagonal areas illustrated by the cells 101, 102 in Figure 1) included in the broader geographic region covered by the network 110. More or fewer cells can be included in the network 110, and the coverage area for the cells 101, 102 may overlap. The shape of the coverage area for each of the cells 101, 102 may be different from one cell to another and is not limited to the hexagonal shapes illustrated in Figure 1. The base stations 130a, 130b in the respective cells 101, 102 can provide wireless communications between each other and the wireless electronic devices 100 in the associated geographic region covered by the network 110.

Each of the base stations 130a, 130b can transmit/receive data to/from the wireless electronic devices 100 over an associated control channel. For example, the base station 130a in cell 101 can communicate with one of the wireless electronic devices 100 in cell 101 over the control channel 122a. The control channel 122a can be used, for example, to page the wireless electronic device 100 in response to calls directed thereto or to transmit traffic channel assignments to the wireless electronic device 100 over which a call associated therewith is to be conducted.

The wireless electronic devices 100 may also be capable of receiving messages from the network 110 over the respective control channels 122a. In various embodiments according to the inventive concepts, the wireless electronic devices 100 receive Short Message Service (SMS), Enhanced Message Service (EMS), Multimedia Message Service (MMS), and/or Smartmessaging™ formatted messages.

The GPS satellite 174 can provide GPS information to the geographic region including cells 101, 102 so that the wireless electronic devices 100 may determine location information. The network 110 may also provide network location information as the basis for the location information applied by the wireless electronic devices 100. In addition, the location information may be provided directly to the server 135 rather than to the wireless electronic devices 100 and then to the server 135. Additionally or alternatively, the wireless electronic devices 100 may communicate with the local wireless network 170.

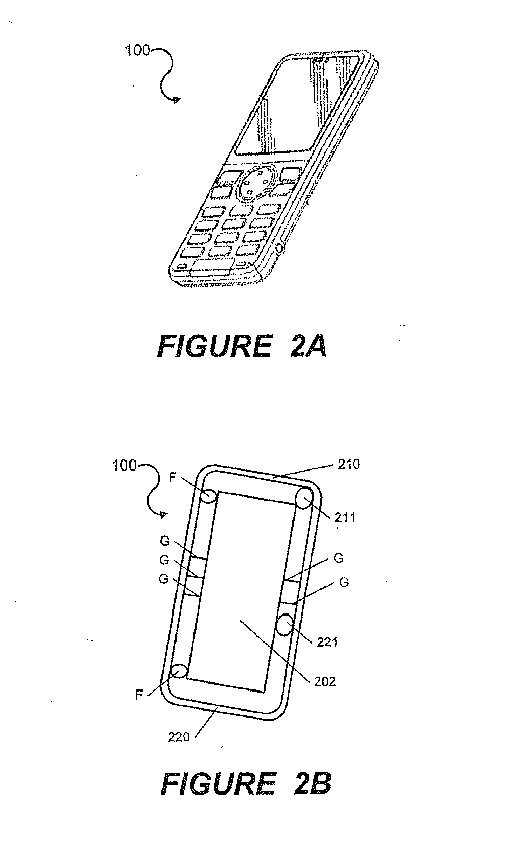

Figures 2A and 2B illustrate front and rear views, respectively, of a wireless electronic device 100, according to various embodiments of the present inventive concepts. Accordingly, Figures 2A and 2B illustrate opposite sides of the wireless electronic device 100. In particular, although a backplate of the wireless electronic device 100 has been removed in Figure 2B to illustrate a variable tuning components 211, 221 of the wireless electronic device 100, it will be understood that an external face of the backplate may be visible to, and/or in contact with, a user of the wireless electronic device 100. In contrast, an internal face of the backplate may face internal portions of the wireless electronic device 100, such as a transceiver circuit.

Figure 2B further illustrates a first antenna 210 and a second antenna 220 around a ground plane 202 of the wireless electronic device 100. The ground plane 202 may be between the backplate and a front external face (e.g., a display) of the wireless electronic device 100. The first and second antennas 210, 220 may collectively form at least a portion of a metal perimeter around the ground plane 202. It will be understood that the metal perimeter may form outer surface edges (e.g., sides) of the wireless electronic device 100, and that the outer surface edges may be substantially perpendicular to the external face of the backplate of the wireless electronic device 100. It will also be understood that the metal perimeter described herein as being "around" the ground plane 202 may extend substantially continuously around the ground plane 202. For example, the metal perimeter may be continuous except for discontinuities for buttons/switches and input/output connections (e.g., audio/video and/or power connections) of the wireless electronic device 100. Moreover, referring still to Figure 2B, ground connections/points G and feed connections/points F may connect the first and second antennas 210, 220 to the ground plane 202.

It will be understood that the first and second antennas 210, 220 may include various types of antennas configured for wireless communications. For example, at least one of the first and second antennas 210, 220 may be a multi-band antenna and/or may be configured to communicate using cellular and/or non-cellular frequencies. As an example, the second antenna 220 may be a primary cellular antenna, whereas the first antenna 210 may be a secondary cellular antenna. Moreover, at least one of the first and second antennas 210, 220 may be a non-planar (e.g., curved) antenna defined by a portion of the metal perimeter of the wireless electronic device 100. In other words, the metal perimeter of the wireless electronic device 100 may include one or more non-planar portions, and the non-planar portion(s) may include at least a portion of one or more of the first and second antennas 210, 220.

It will also be understood that more or fewer than the two antennas 210, 220 may be included in the metal perimeter of the wireless electronic device 100. For example, the metal perimeter may include a third antenna in some embodiments. Alternatively, the metal perimeter may include only one antenna (e.g., the antenna 220). Although the first and second antennas 210, 220 are illustrated as including portions of the top and bottom, respectively, of the metal perimeter, the first and second (or first through third, etc.) metal perimeter antennas may be rearranged at different locations of the metal perimeter. Also, any of the antennas may include a primary cellular antenna, a diversity cellular antenna, a Global Positioning System (GPS) antenna, and/or a WiFi/Bluetooth antenna.

Referring still to Figure 2B, although two variable tuning components 211, 221 are illustrated, more or fewer than the two variable tuning components 211, 221 may be included in the wireless electronic device 100. For example, in some embodiments, the wireless electronic device 100 may have only one of the variable tuning components 211, 221. Alternatively, in some embodiments, the wireless electronic device 100 may have three or more variable tuning components.

The variable tuning components 211, 221 may be various types of variable tuning components. For example, at least one of the variable tuning components 211, 221 may include a tuning switch that is configured to switch between a plurality of different electrical values (e.g., different capacitance values or different impedance values). As an example, at least one of the variable tuning components 211, 221 may include a Single Pole Double Throw (SPDT) tuning switch (i.e., a two-way switch). Alternatively, depending on the bandwidth required, additional switching positions may be configured. As an example, a tuning switch may be a three-way switch, a four-way switch, or more. Moreover, at least one of the variable tuning components 211, 221 may be a shunt component that is configured to switch between a plurality of different electrical values.

A tuning switch (e.g., one of the variable tuning components 211, 221) may be configured to tune a resonant frequency of an antenna (e.g., one of the antennas 210, 220) by switching between different load components of the tuning switch. For example, output ports of a tuning switch may be connected to a plurality of different capacitors. Accordingly, a tuning switch may switch between a plurality of different capacitance values. Alternatively, a tuning switch may switch between a plurality of different impedance values. Moreover, although an example of a tuning switch is described herein, it will be understood that at least one of the variable tuning components 211, 221 may alternatively be an adaptive capacitor array, an analog tunable capacitor, or another tuning component that can select between different capacitance values or different impedance values.

An input port of the variable tuning component(s) 211, 221 may be the metal perimeter of the wireless electronic device 100. Accordingly, it will be understood that the variable tuning component(s) 211, 221 may be directly physically connected to the metal perimeter and may thus determine a load (e.g., a load component corresponding to a particular capacitance value or impedance value) to which the metal perimeter will be connected.

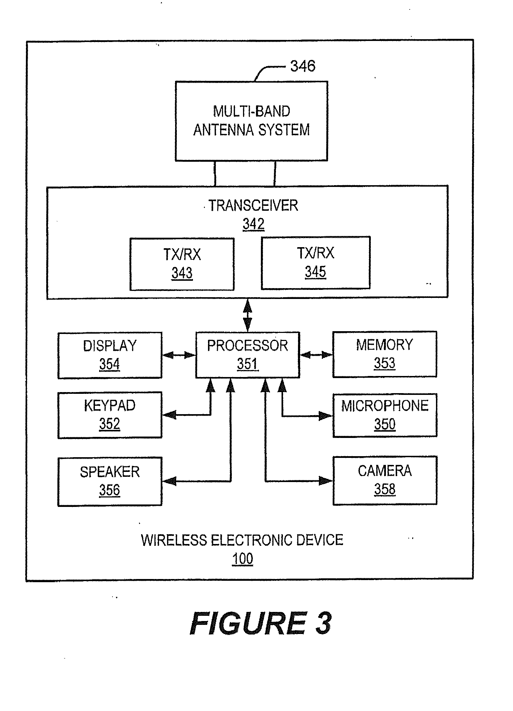

Referring now to Figure 3, a block diagram is provided illustrating a wireless electronic device 100, according to various embodiments of the present inventive concepts. As illustrated in Figure 3, a wireless electronic device 100 may include a multi-band antenna system 346, a transceiver 342, and a processor 351. The wireless electronic device 100 may further include a display 354, keypad 352, speaker 356, memory 353, microphone 350, and/or camera 358.

A transmitter portion of the transceiver 342 converts information, which is to be transmitted by the wireless electronic device 100, into electromagnetic signals suitable for radio communications (e.g., to the network 110 illustrated in Figure 1). A receiver portion of the transceiver 342 demodulates electromagnetic signals, which are received by the wireless electronic device 100 from the network 110 to provide the information contained in the signals in a format understandable to a user of the wireless electronic device 100. The transceiver 342 may include transmit/receive circuitry (TX/RX) that provides separate communication paths for supplying/receiving RF signals to different radiating elements of the multi-band antenna system 346 via their respective RF feeds. Accordingly, when the multi-band antenna system 346 includes two active antenna elements (e.g., the first and second antennas 210, 220), the transceiver 342 may include two transmit/receive circuits 343, 345 connected to different ones of the antenna elements via the respective RF feeds.

The transceiver 342, in operational cooperation with the processor 351, may be configured to communicate according to at least one radio access technology in two or more frequency ranges. The at least one radio access technology may include, but is not limited to, WLAN (e.g., 802.11/WiFi), WiMAX (Worldwide Interoperability for Microwave Access), TransferJet, 3GPP LTE (3rd Generation Partnership Project Long Term Evolution), 4G, Time Division LTE (TD LTE), Universal Mobile Telecommunications System (UMTS), Global Standard for Mobile (GSM) communication, General Packet Radio Service (GPRS), enhanced data rates for GSM evolution (EDGE), DCS, PDC, PCS, Code Division Multiple Access (CDMA), wideband-CDMA, and/or CDMA2000. The radio access technology may operate using such frequency bands as 700-800 Megahertz (MHz), 824-894 MHz, 880-960 MHz, 1710-1880 MHz, 1820-1990 MHz, 1920-2170 MHz, 2300-2400 MHz, and 2500-2700 MHz. Other radio access technologies and/or frequency bands can also be used in embodiments according to the inventive concepts. Various embodiments may provide coverage for non-cellular frequency bands such as Global Positioning System (GPS), WLAN, and/or Bluetooth frequency bands. As an example, in various embodiments according to the inventive concepts, the local wireless network 170 (illustrated in Figure 1) is a WLAN compliant network. In various other embodiments according to the inventive concepts, the local wireless network 170 is a Bluetooth compliant interface.

The wireless electronic device 100 is not limited to any particular combination/arrangement of the keypad 352 and the display 354. As an example, it will be understood that the functions of the keypad 352 and the display 354 can be provided by a touch screen through which the user can view information, such as computer displayable documents, provide input thereto, and otherwise control the wireless electronic device 100. Additionally or alternatively, the wireless electronic device 100 may include a separate keypad 352 and display 354.

It will be understood that the first and second antennas 210, 220 may provide substantial portions of the sides/edges of the wireless electronic device 100 between the backplate and the display 354. Moreover, it will be understood that the display 354 may be a display screen/device that is on (e.g., positioned over) the ground plane 202.

Referring still to Figure 3, the memory 353 can store computer program instructions that, when executed by the processor circuit 351, carry out operations of the wireless electronic device 100. For example, the processor circuit 351 may determine which load component of the variable tuning component 221 should be selected at a given frequency of operation, and the processor circuit 351 may send a signal to the variable tuning component 221 to control tuning of a resonant frequency by the variable tuning component 221. Moreover, the memory 353 can be, for example, non-volatile memory, such as EEPROM (flash memory), that retains the stored data while power is removed from the memory 353.

Referring to Figures 2B and 3, each of the first and second antennas 210, 220 may be connected (e.g., by one or more feed points F) to a radio/source transceiver. As an example, each of the first and second antennas 210, 220 may be connected to the transceiver circuit 342 of Figure 3. The transceiver circuit 342 may include respective transceivers (e.g., the transceivers 343, 345, etc.) configured to provide communications using the first and second antennas 210, 220. Moreover, it will be understood that one or more of the respective transceivers may be separate transceiver circuits that are not included in the transceiver circuit 342.

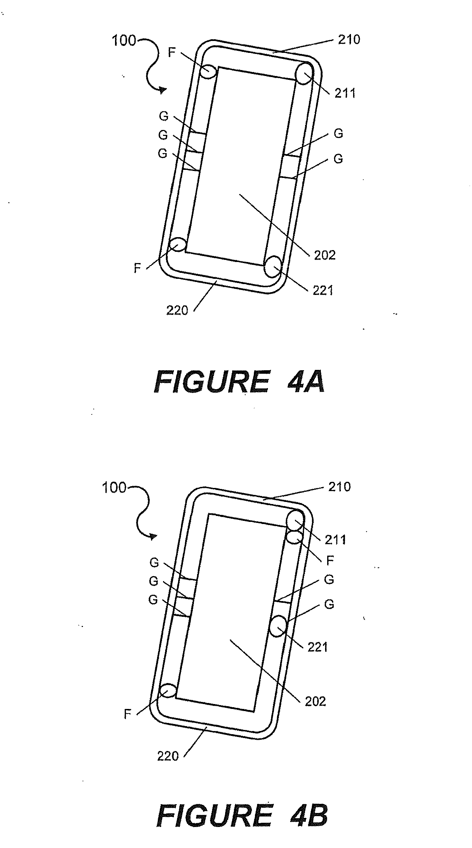

Referring now to Figures 4A and 4B, detailed views of a metal perimeter of a wireless electronic device 100 are illustrated, according to various embodiments of the present inventive concepts. For example, Figure 4A illustrates that the variable tuning component 221 of the wireless electronic device 100 may be located at a different position from the position illustrated in Figure 2B. As an example, the ground plane 202 and the metal perimeter may be spaced apart such that a slot (e.g., a gap/void) between the ground plane 202 and the metal perimeter includes the variable tuning component 221. In some embodiments, the slot may include a distance of at least about 2.0-6.0 millimeters (mm) between the top of the metal perimeter (e.g., including a portion of the first antenna 210) and the ground plane 202, and a distance of at least about 6.0-9.0 mm between the bottom of the metal perimeter (e.g., including a portion of the second antenna 220) and the ground plane 202.

The position of the variable tuning component 221 in the slot may affect operations of the variable tuning component 221. For example, the variable tuning component 221 illustrated in Figure 2B is closer to a ground point G than the variable tuning component 221 illustrated in Figure 4A is to a ground point G. Accordingly, the variable tuning component 221 illustrated in Figure 2B may be exposed to lower voltages and may experience fewer Radiated Spurious Emission (RSE) problems caused by switching between load components. On the other hand, the lower voltages may make switching between load components more difficult and may reduce the likelihood that the wireless electronic device 100 can cover all low-band frequencies (e.g., all frequencies between 704-960 MHz).

In comparison with the variable tuning component 221 illustrated in Figure 2B, the variable tuning component 221 illustrated in Figure 4A is farther from a ground point G of the second antenna 220 and is closer to a mid-point in the slot between the ground point G and a feed point F of the second antenna 220. Accordingly, the variable tuning component 221 illustrated in Figure 4A may have a higher voltage over it and may thus experience more RSE problems caused by switching between load components. As an example, when the second antenna 220 transmits in the third harmonic of GSM 900 (e.g., at 2707 MHz), a value of RSE may fail to meet a desired/specified value (e.g., according to regulatory requirements) by 30 decibels (dB). On the other hand, the higher voltage to which the variable tuning component 221 illustrated in Figure 4A is exposed may make switching between load components easier (e.g., may provide greater switching control, precision), may reduce switching losses, and may provide a wider range of frequencies when switching. In other words, although regulatory requirements may dictate the position of the variable tuning component 221 (e.g., to a position at which the variable tuning component 221 will be exposed to a relatively low voltage, thus reducing harmonics) in some embodiments, it will be understood that in embodiments where the variable tuning component 221 can be positioned to use a higher voltage and yet still meet regulatory requirements, the variable tuning component 221 may improve switching control, losses, and range.

Accordingly, it will be understood that the variable tuning component 221 may be located at different positions in the slot in the wireless electronic device 100 to achieve different performance characteristics of the second antenna 220 (to which the variable tuning component 221 may be electrically/physically coupled). Similarly, the variable tuning component 211 may be located at different positions in the wireless electronic device 100 to achieve different performance characteristics of the first antenna 210 (to which the variable tuning component 211 may be electrically/physically coupled).

Referring to Figure 4B, the variable tuning component 211 may, in some embodiments, be located at a feed point F of the first antenna 210. For example, in embodiments where the first antenna 210 is a diversity receive-only antenna (e.g., for some 3G, 4G modes), an input port of the variable tuning component 211 may be physically/electrically coupled to the feed point F of the first antenna 210. Additionally or alternatively, in some embodiments, an input port of the variable tuning component 221 may be physically/electrically coupled to a ground point G of the second antenna 220. As illustrated in Figures 2B and 4A, however, various embodiments may provide a variable tuning component 211 and/or a variable tuning component 221 spaced apart from ground points G and feed points F.

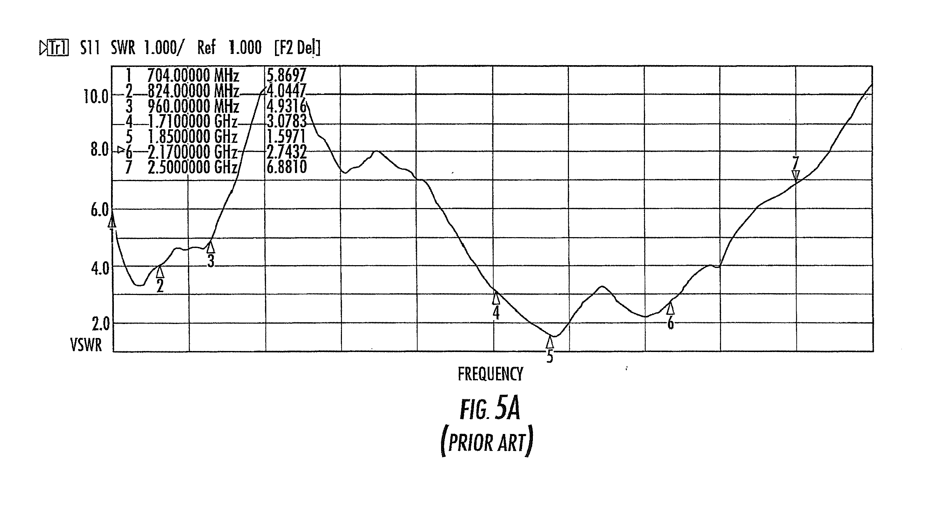

Referring now to Figure 5A, a Voltage Standing Wave Ratio (VSWR) graph of a prior art wireless electronic device is illustrated. Although a VSWR of 3.0 or lower may be relatively good for a wireless electronic device, Figure 5A illustrates that a wireless electronic device without the variable tuning component 211 or the variable tuning component 221 (which are illustrated, e.g., in Figure 2B) may provide relatively weak VSWR characteristics at lower frequencies. In particular, Figure 5A illustrates a VSWR above 3.0 for all frequencies between 704 MHz and 960 MHz.

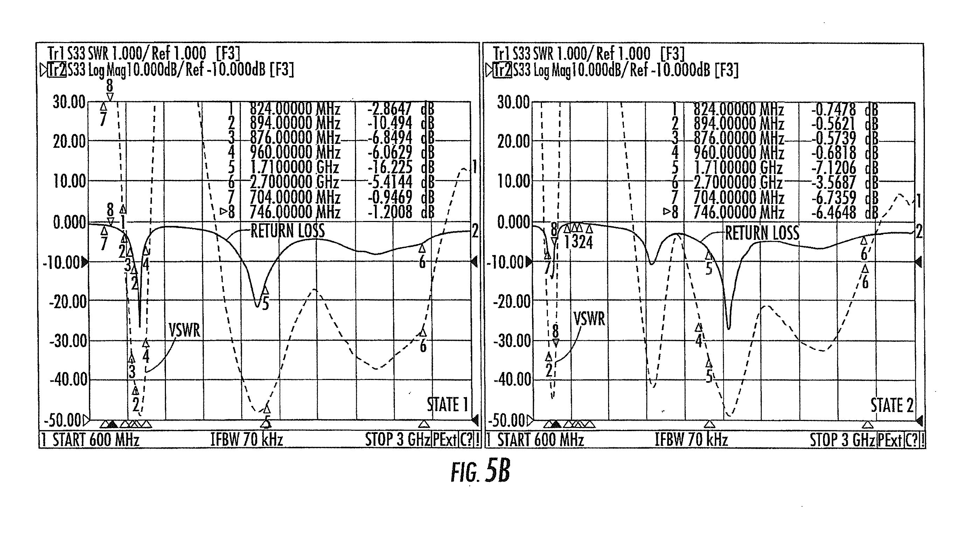

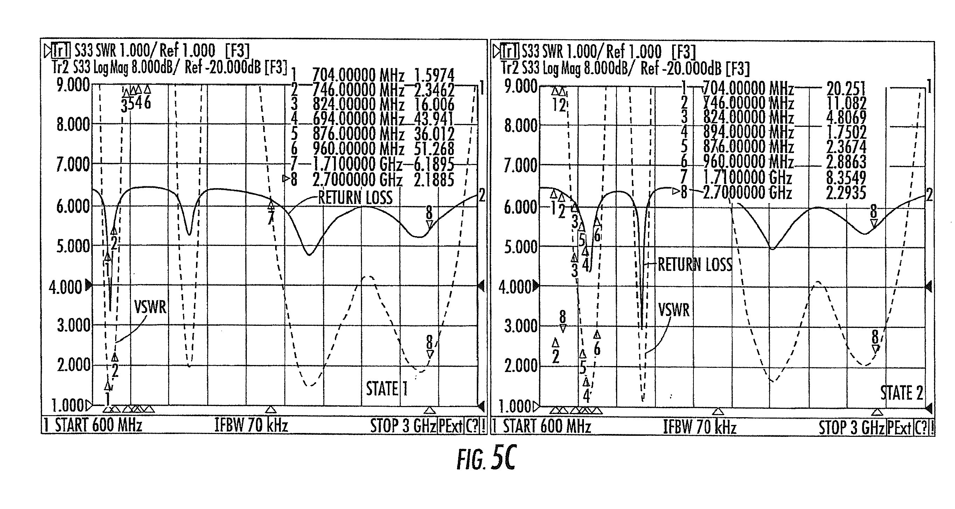

In contrast with Figure 5A, Figures 5B and 5C illustrate VSWR and return loss graphs of a wireless electronic device 100 according to various embodiments of the present inventive concepts. For example, Figure 5B illustrates that a wireless electronic device 100 including the variable tuning component 221 physically/electrically coupled to the second antenna 220 (e.g., as illustrated in Figure 2B) may tune (e.g., change/shift) a resonant frequency of the second antenna 220 by switching from State 1 to State 2, or vice versa, of the variable tuning component 221. As an example, State 1 of the variable tuning component 221 may select a first load capacitance (e.g., 0.2 picoFarads (pF)), whereas State 2 may select a second load capacitance (e.g., 0.5 pF) different from the first load capacitance. Accordingly, by switching between State 1 and State 2, the variable tuning component 221 may tune a resonant frequency of the second antenna 220 and may thereby cover a wider bandwidth.

As another example, Figure 5C illustrates that a wireless electronic device 100 including the variable tuning component 211 physically/electrically coupled to the first antenna 210 (e.g., as illustrated in Figure 2B) may tune (e.g., change/shift) a resonant frequency of the first antenna 210 by switching from State 1 to State 2, or vice versa, of the variable tuning component 211.

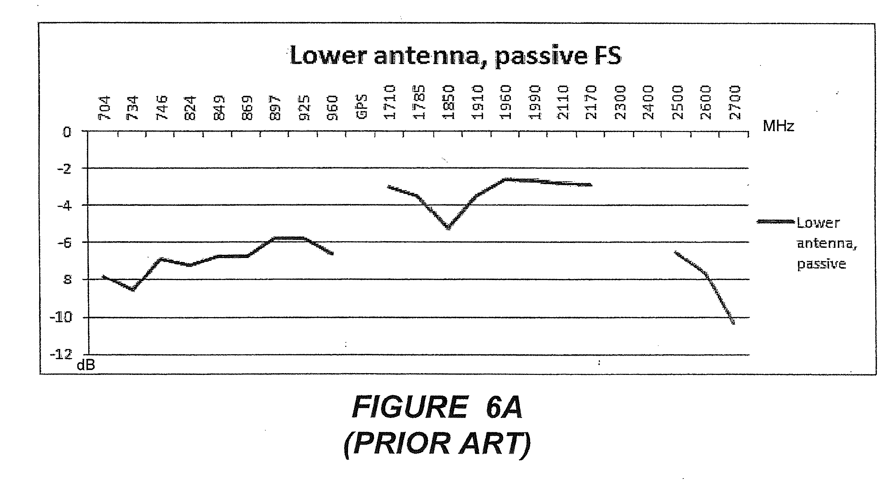

Referring now to Figure 6A, a graph of gain of a prior art wireless electronic device is illustrated. Although an average efficiency of 50% (e.g., a gain of -3.0 decibels (dB)) or higher may be relatively good for a wireless electronic device, Figure 6A illustrates that a wireless electronic device without the variable tuning component 211 or the variable tuning component 221 may provide relatively weak average efficiency characteristics at lower frequencies. In particular, Figure 6A illustrates an average efficiency below 25% (e.g., a gain below -6.0 dB) for most frequencies between 704 MHz and 960 MHz.

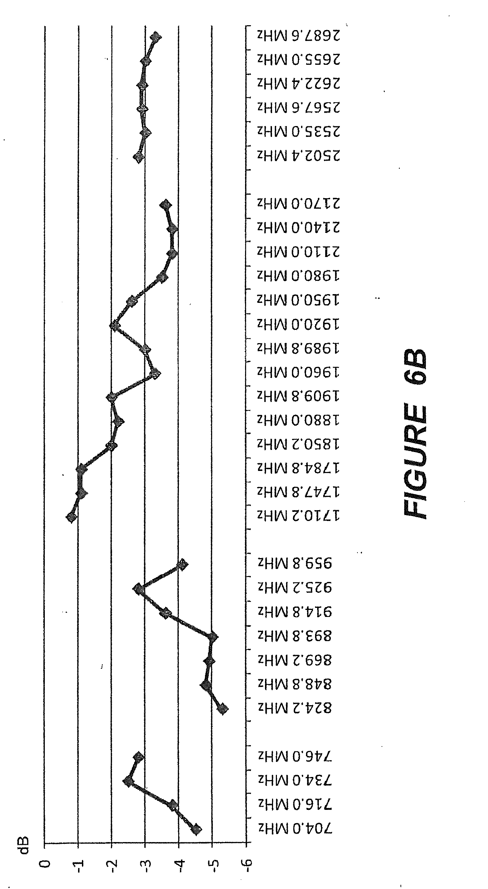

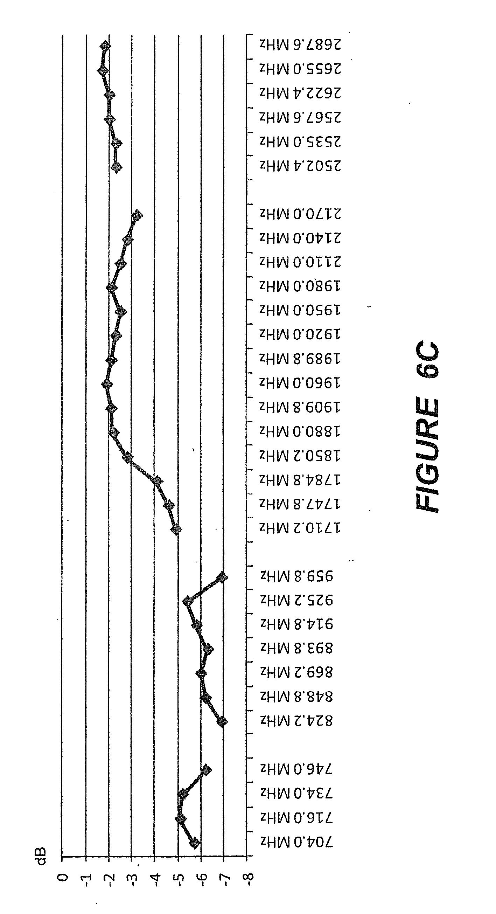

In contrast with Figure 6A, Figures 6B and 6C illustrate graphs of gain of second and first antennas 220, 210, respectively, of a wireless electronic device 100 according to various embodiments of the present inventive concepts. For example, Figure 6B illustrates that a wireless electronic device 100 that includes the variable tuning component 221 coupled to the second antenna 220 (e.g., as illustrated in Figure 2B) may provide at least a 1.0-3.0 dB improvement in gain for the second antenna 220 for most low-band frequencies. As another example, Figure 6C illustrates that a wireless electronic device 100 that includes the variable tuning component 211 coupled to the first antenna 210 may provide a gain near or above -6.0 dB for many low-band frequencies.

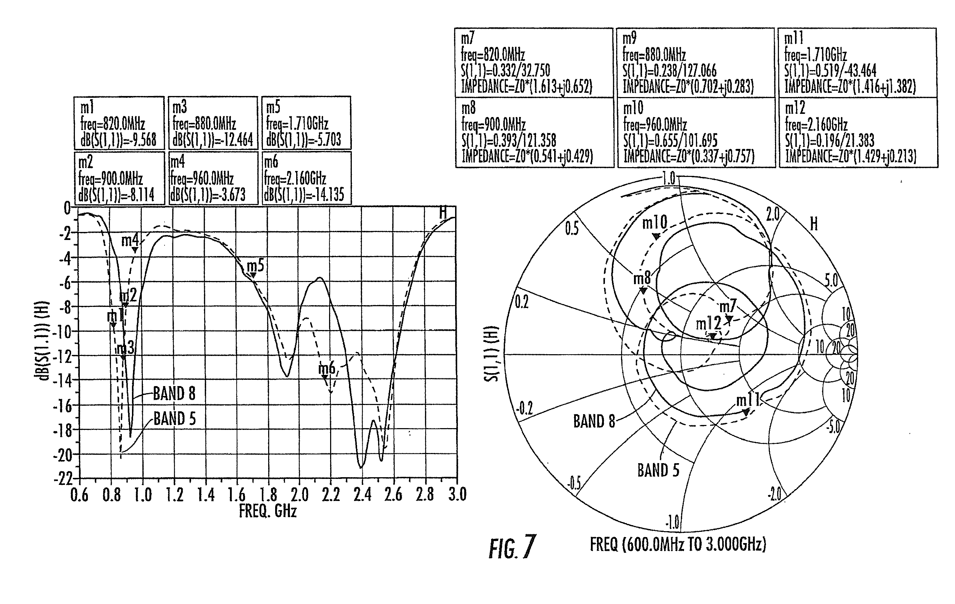

Referring now to Figure 7, a return loss graph and a Smith chart are illustrated for a simulation of a first antenna 210 (e.g., a secondary antenna) of a wireless electronic device 100 according to various embodiments of the present inventive concepts. In particular, the return loss graph illustrates a shift in resonant frequency between States 1 and 2 of a variable tuning component 211 coupled to the first antenna 210. As an example, the variable tuning component 211 may switch between different load capacitance values (e.g., 2.7 pF versus 4.0 pF) corresponding to respective ones of States 1 and 2 of the variable tuning component 211. Specifically, Figure 7 illustrates that Band 5 (e.g., 824-894 MHz) may be provided by State 1, and that Band 8 (e.g., 880-960 MHz) may be provided by State 2. Accordingly, the return loss graph in Figure 7 illustrates a relatively small shift in resonant frequency. Moreover, the Smith chart in Figure 7 indicates a change in impedance between State 1 and State 2.

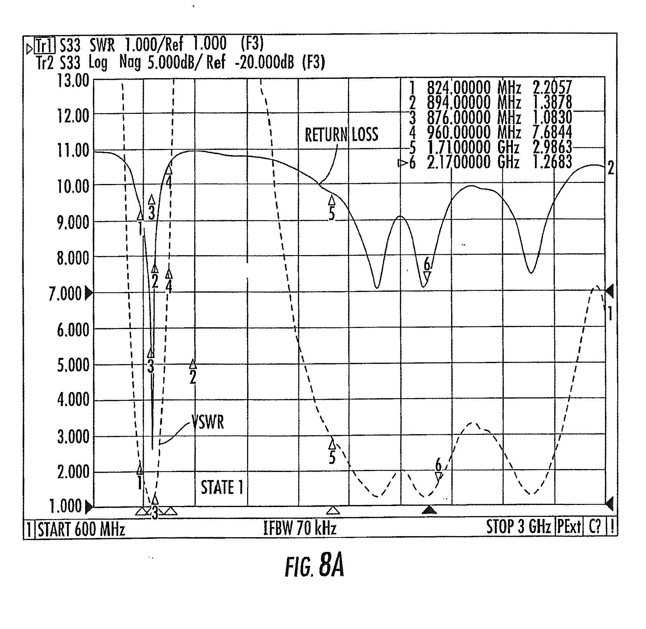

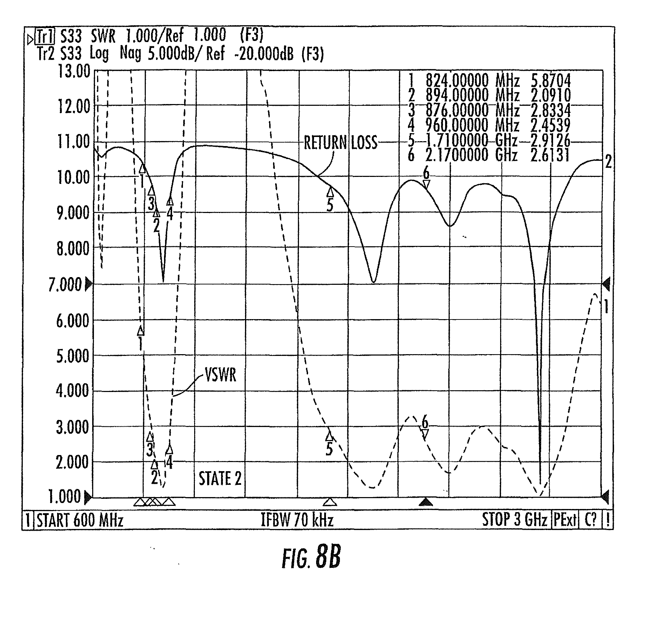

Referring now to Figures 8A and 8B, VSWR and return loss graphs are illustrated for passive (e.g., actual) measurements of a first antenna 210 (e.g., a secondary antenna) of a wireless electronic device 100 according to various embodiments of the present inventive concepts. Specifically, Figure 8A illustrates a VSWR graph and a return loss graph for State 1 of a variable tuning component 211 coupled to the first antenna 210, and Figure 8B illustrates a VSWR graph and a return loss graph for State 2 of the variable tuning component 211 coupled to the first antenna 210. In particular, in comparison with the simulated results provided in Figure 7, Figures 8A and 8B illustrate actual measurements indicating a shift in resonant frequency between State 1 and State 2.

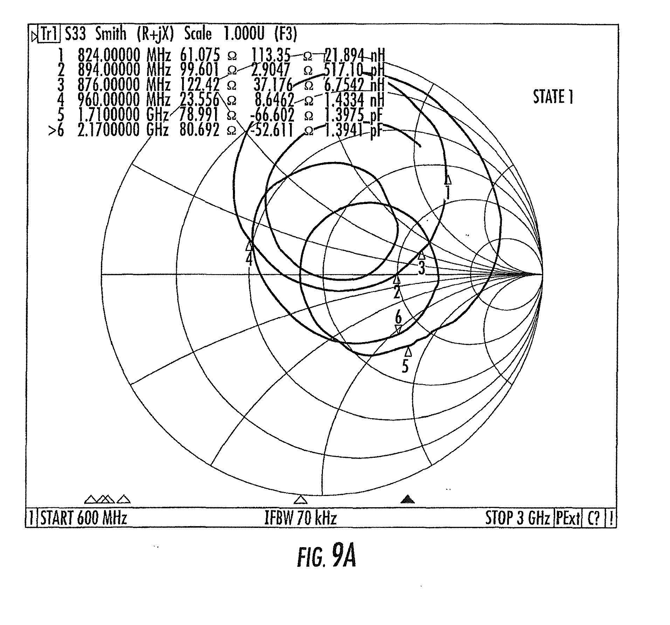

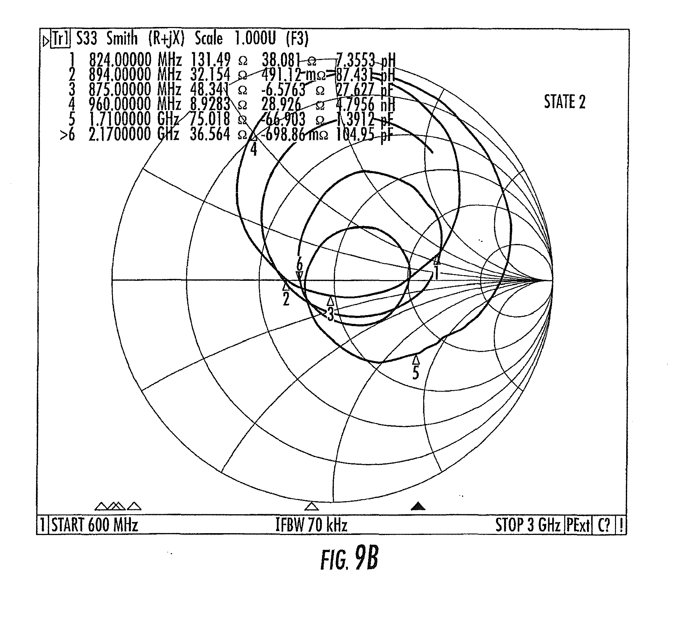

Referring now to Figures 9A and 9B, Smith charts are illustrated of a wireless electronic device 100, according to various embodiments of the present inventive concepts. In particular, Figures 9A and 9B illustrate Smith charts corresponding to the measurements of the first antenna 210 that are illustrated in Figures 8A and 8B, respectively. In other words, in comparison with the simulated results provided in Figure 7, Figures 9A and 9B illustrate actual measurements indicating a change in impedance between State 1 and State 2 of the variable tuning component 211 coupled to the first antenna 210.

Various embodiments described herein may provide for tuning of a resonant frequency of the first antenna 210 and/or the second antenna 220 of the metal perimeter of a wireless electronic device 100 by using the variable tuning component 211 and/or the variable tuning component 221, respectively. Such resonant-frequency tuning may improve matching and freespace performance in low-band frequencies by at least 1.0-3.0 dB. Furthermore, the variable tuning component 211 and/or the variable tuning component 221 may be positioned in the wireless electronic device 100 such that RSE problems are reduced or such that switching control, losses, and range are improved.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed various embodiments and, although specific terms are employed, they are used in a generic and descriptive sense only and not for purposes of limitation.

## Claims

1. A wireless electronic device, comprising:
a ground plane;
a metal perimeter around the ground plane, the metal perimeter comprising a multi-band cellular antenna;
a processor; and
a variable tuning component coupled to the metal perimeter and configured to tune a resonant frequency of the multi-band cellular antenna in response to a signal from the processor.

2. The wireless electronic device of Claim 1, wherein:
the variable tuning component is configured to select between a plurality of states corresponding to a plurality of respective load components; and
in each of the selectable states, the variable tuning component is configured to differently tune the resonant frequency of the multi-band cellular antenna;
wherein the plurality of load components comprise a plurality of respective capacitance values or impedance values that differently tune the resonant frequency of the multi-band cellular antenna;
wherein the variable tuning component comprises a tuning switch configured to switch between the plurality of respective capacitance values or impedance values to tune the resonant frequency of the multi-band cellular antenna.

3. The wireless electronic device of Claim 1, wherein the variable tuning component is in a slot and/or gap between the metal perimeter and the ground plane.

4. The wireless electronic device of Claim 1, wherein the multi-band cellular antenna comprises a non-planar antenna of the metal perimeter.

5. The wireless electronic device of Claim 1, wherein:
the multi-band cellular antenna comprises a first antenna of the metal perimeter; and
the metal perimeter further comprises a second antenna; and
wherein the first and second antennas comprise first and second non-planar antennas, respectively.

6. The wireless electronic device of Claim 1, wherein:
the multi-band cellular antenna comprises a first antenna of the metal perimeter; and
the metal perimeter further comprises a second antenna; and wherein
the signal from the processor comprises a first signal from the processor;
the variable tuning component comprises a first variable tuning component coupled to the first antenna of the metal perimeter;
tuning of the first variable tuning component is configured to be controlled by the first signal from the processor;
the wireless electronic device further comprises a second variable tuning component coupled to the second antenna of the metal perimeter; and
tuning of the second variable tuning component is configured to be controlled by a second signal from the processor.

7. The wireless electronic device of Claim 1, wherein:
the wireless electronic device further comprises a ground point and a feed point of the multi-band cellular antenna; and
the variable tuning component is spaced apart from, and adjacent a midpoint between, the ground point and the feed point.

8. The wireless electronic device of Claim 1, wherein:
the wireless electronic device further comprises a ground point and a feed point of the multi-band cellular antenna; and
the variable tuning component is adjacent the ground point.

9. The wireless electronic device of Claim 1, wherein:
the metal perimeter comprises a non-planar portion comprising at least a portion of the multi-band cellular antenna; and
the wireless electronic device further comprises:
a display screen on the ground plane; and
a transceiver circuit coupled to the multi-band cellular antenna and configured to provide communications for the wireless electronic device.

10. A wireless electronic device, comprising:
a ground plane;
a display screen on the ground plane;
a processor;
a metal perimeter around the ground plane, the metal perimeter comprising first and second antennas;
a variable tuning component coupled to the metal perimeter and configured to tune a resonant frequency of the first antenna in response to a signal from the processor; and
a transceiver circuit coupled to at least one of the first and second antennas and configured to provide communications for the wireless electronic device.

11. The wireless electronic device of Claim 10, wherein:
the variable tuning component is configured to select between a plurality of states corresponding to a plurality of respective load components; and
in each of the selectable states, the variable tuning component is configured to differently tune the resonant frequency of the first antenna;
wherein the plurality of load components comprise a plurality of respective capacitance values or impedance values that differently tune the resonant frequency of the first antenna; and
wherein the variable tuning component comprises a tuning switch configured to switch between the plurality of respective capacitance values or impedance values to tune the resonant frequency of the first antenna.

12. The wireless electronic device of Claim 10, wherein:
the variable tuning component comprises a first variable tuning component; and
the wireless electronic device further comprises a second variable tuning component coupled to the metal perimeter and configured to tune a resonant frequency of the second antenna.

13. The wireless electronic device of Claim 10, wherein
the first antenna comprises a non-planar primary cellular antenna; and
the second antenna comprises a non-planar secondary cellular antenna.

14. The wireless electronic device of Claim 10, wherein:
the wireless electronic device further comprises a ground point and a feed point of the first antenna; and
the variable tuning component is spaced apart from, and adjacent a midpoint between, the ground point and the feed point of the first antenna.

15. The wireless electronic device of Claim 10, wherein:
the wireless electronic device further comprises a ground point and a feed point of the first antenna; and
the variable tuning component is adjacent the ground point of the first antenna.
